# EUROPÄISCHE PATENTSCHRIFT

(11) **EP 3 285 983 B1**
(45) Veröffentlichungstag und Bekanntmachung des Hinweises auf die Patenterteilung: **04.08.2021**
(21) Anmeldenummer: 16714407.0
(22) Anmeldetag: 04.04.2016
(51) Int. Cl.: B29C 45/16, B29C 45/32, B29C 45/00

(54) **VERFAHREN ZUM HERSTELLEN EINES MEHRTEILIGEN KUNSTSTOFFBAUTEILS SOWIE MEHRTEILIGES KUNSTSTOFFBAUTEIL**
METHOD FOR PRODUCING A MULTI-SECTION PLASTIC COMPONENT, AND A MULTI-SECTION PLASTIC COMPONENT
PROCÉDÉ DE FABRICATION D'UN COMPOSANT EN PLASTIQUE EN PLUSIEURS PARTIES ET COMPOSANT EN PLASTIQUE EN PLUSIEURS PARTIES

(30) Priorität: 22.04.2015 DE 102015207262
(43) Veröffentlichungstag der Anmeldung: 28.02.2018
(73) Patentinhaber: Bayerische Motoren Werke Aktiengesellschaft, 80809 München (DE)
(72) Erfinder: BRUNNER, Johann, 84494 Neumarkt St. Veit (DE)
(86) Internationale Anmeldenummer: PCT/EP2016/057343
(87) Internationale Veröffentlichungsnummer: WO 2016/169757

(56) Entgegenhaltungen:
- EP-A1- 1 974 886
- WO-A2-02/064402
- DE-A1-102011 017 040
- DE-A1-102012 014 082

## Beschreibung

Es werden ein Verfahren zum Herstellen eines mehrteiligen Kunststoffbauteils sowie ein mehrteiliges Kunststoffbauteil angegeben. Bei dem mehrteiligen Kunststoffbauteil kann es sich beispielsweise um ein Fahrzeugaußenhautteil, wie z.B. eine Fahrzeugheckklappe, einen Fahrzeugheckspoiler oder eine Fahrzeugheckblende handeln.

Die Druckschrift DE 10 2011 017040 A1 beschreibt ein Verfahren zum Herstellen eines oberflächenbeschichteten Formteils sowie Vorrichtungen dafür. Um das Aufbringen einer Beschichtung auf ein spritzgegossenes Formteil zu erleichtern ist bei dem Verfahren und den Vorrichtungen vorgesehen, dass eine Wirkrichtung einer zweiten Formwerkzeughälfte um einen ersten Winkel und/oder parallel zu einer Wirkrichtung einer ersten Formwerkzeughälfte versetzt ist. Weiterhin ist beschrieben, dass bei dem Verfahren durch ein Lackauftragen direkt auf dem Formteil oder in einer Kavität kein Lackanspritzpunkt auf dem Formteil entsteht.

Die Druckschrift DE 10 2007 014 847 A1 bzw. die Druckschrift EP 1 974 886 A1 aus derselben Patentfamilie beschreibt ein mehrteiliges Kunststoffbauteil, dass mittels einer Spritzgussvorrichtung hergestellt wird. Bei dem Herstellungsverfahren werden zwei Kunststoffspritzgusseinzelteile mittels eines Adhäsivs aus einem thermoplastischen Elastomer (TPE) miteinander verbunden. Thermoplastische Elastomere zeichnen sich beispielsweise durch ihre einfache Verarbeitbarkeit (sehr hohe Fließfähigkeit) aus. Die Druckscrift DE102012014082 offenbart ein Dekorformteil, insbesondere ein Auskleidungsteil für ein Kfz, mit einer Furnierlage, welche auf der Rückseite mit einer hinterspritzten Verstärkungslage und an der Sichtseite mit einer überspritzen transparenten Abdeckung versehen ist, sowie ein Verfahren zur Herstellung eines solchen Dekorformteils. Zur Verbesserung der Haltbarkeit des Dekorformteils wird mit der vorliegenden Erfindung vorgeschlagen, auf der transparenten Abdeckung eine Decklage vorzusehen. Bei dem Verfahren zur Herstellung eines erfindungsgemäßen Dekorformteils wird in einen Spalt zwischen der Furnierlage und der Decklage Kunststoff eingespritzt, der die beiden Lagen miteinander verbindet.

Nachteilig bei dem im Stand der Technik beschriebenen Kunststoffbauteil ist es, dass das aus dem thermoplastischen Elastomer gebildete Adhäsiv nicht bzw. nur sehr schlecht lackierbar ist, da TPE einen extrem niedrigen Elastizitätsmodul aufweist. Bei Kunststoffbauteilen, insbesondere bei Fahrzeugaußenhautteilen, bei denen das Adhäsiv bzw. beide mittels des Adhäsivs verbundenen Kunststoffspritzgusseinzelteile nach außen hin sichtbar sind, ergeben sich dadurch Nachteile im äußeren Erscheinungsbild.

Ausgehend vom Stand der Technik ist es daher eine Aufgabe zumindest einiger Ausführungsformen, ein Verfahren zum Herstellen eines mehrteiligen Kunststoffbauteils anzugeben, mittels dessen ein mehrteiliges Kunststoffbauteil mit zumindest einem ersten und einem zweiten Kunststoffspritzgusseinzelteil hergestellt werden kann, welches eine gute Lackierbarkeit aufweist. Eine weitere Aufgabe ist es, ein mit dem Verfahren hergestelltes mehrteiliges Kunststoffbauteil anzugeben.

Diese Aufgaben werden durch ein Verfahren und einen Gegenstand gemäß den unabhängigen Patentansprüchen gelöst. Vorteilhafte Ausführungsformen und Weiterbildungen gehen weiterhin aus den abhängigen Patentansprüchen, der nachfolgenden Beschreibung und aus den Zeichnungen hervor.

Gemäß einer Ausführungsform werden bei einem Verfahren zum Herstellen eines mehrteiligen Kunststoffbauteils ein erstes Kunststoffspritzgusseinzelteil und ein zweites Kunststoffspritzgusseinzelteil ausgebildet. Bei den Kunststoffspritzgusseinzelteilen handelt es sich um mittels eines Spritzgussverfahrens hergestellte Einzelbauteile. Die Kunststoffspritzgusseinzelteile sind vorzugsweise aus einem thermoplastischen Material gebildet. Beispielsweise weisen die Kunststoffspritzgusseinzelteile Polypropylen, Polyamid und/oder Polybutylenterephthalat auf oder bestehen aus Polypropylen, Polyamid oder Polybutylenterephthalat.

Des Weiteren werden die Kunststoffspritzgusseinzelteile durch Einspritzen einer Kunststoffformmasse gefügt. Bei der Kunststoffformmasse handelt es sich um einen nichtelastomeren Thermoplasten. Der nichtelastomere Thermoplast ist vorzugsweise ein Thermoplast im klassischen Sinne. Insbesondere kann es sich bei dem nichtelastomeren Thermoplasten um einen Thermoplasten ohne Elastomeranteil handeln. Bei dem nichtelastomeren Thermoplasten handelt es sich hingegen nicht um ein thermoplastisches Elastomer. Nach einem Aushärtevorgang bildet die aus dem nichtelastomeren Thermoplasten gebildete Kunststoffformmasse ein Kunststoffverbindungsbauteil.

Weiterhin werden sowohl die Kunststoffspritzgusseinzelteile als auch das Kunststoffverbindungsbauteil in einem weiteren Verfahrensschritt zumindest teilweise lackiert. Durch den Einsatz eines nichtelastomeren Thermoplasten zum Verbinden der Kunststoffspritzgusseinzelteile wird vorteilhafterweise eine gute Lackierbarkeit sowie eine hohe Steifigkeit des mehrteiligen Kunststoffbauteils erreicht.

Erfindungsgemäß weist der nichtelastomere Thermoplast einen Schmelzflussindex MFR auf, wobei der Schmelzflussindex MFR größer oder gleich 70 g / 10 min ist. Gemäß einer besonders bevorzugten Ausführungsform weist der nichtelastomere Thermoplast einen Schmelzflussindex von größer oder gleich 100 g / 10 min auf. Unter den angegebenen Schmelzflussindizes werden dabei die unter den für die jeweiligen Materialien typischen Prüfbedingungen erhaltenen Schmelzflussindizes verstanden, beispielsweise bei einer Prüftemperatur von 190 °C bzw. 230 °C und einer Prüflast von beispielsweise 2,16 kg bzw. 5 kg.

Erfindungsgemäß weist der Thermoplast ein Polyolefin auf oder besteht aus einem Polyolefin. Beispielsweise kann der nichtelastomere Thermoplast Polypropylen, Polyethylen und/oder Polyisobutylen aufweisen oder aus Polypropylen, Polyethylen oder Polyisobutylen bestehen.

Gemäß einer weiteren Ausführungsform weist der nichtelastomere Thermoplast statistische Copolymere, wie z.B. sogenannte Random-Copolymere, auf bzw. besteht daraus.

Gemäß einer weiteren Ausführungsform weist das Kunststoffverbindungsbauteil eine Shore-D-Härte von größer oder gleich 50 auf. Erfindungsgemäß weist das Kunststoffverbindungsbauteil eine Shore-D-Härte von mindestens 60 auf.

Gemäß einer weiteren Ausführungsform wird das mehrteilige Kunststoffbauteil mittels einer Vorrichtung zum Spritzgießen gebildet, welche zumindest zwei äußere Werkzeugelemente und mindestens zwei zwischen den äußeren Werkzeugelementen angeordnete innere Werkzeugelemente aufweist. Die äußeren Werkzeugelemente bilden dabei vorzugsweise mit dem jeweils angrenzenden inneren Werkzeugelement jeweils eine Kavität, in die mittels eines oder mehrerer Spritzaggregate zur Erzeugung der Kunststoffspritzgusseinzelteile eine Kunststoffformmasse eingebracht wird. Vorzugsweise werden bei dem Verfahren die zwei inneren Werkzeugelemente gedreht und/oder verfahren.

Gemäß einer weiteren Ausführungsform weist die Vorrichtung zum Spritzgießen mindestens ein Fügeaggregat zum Fügen der Kunststoffspritzgusseinzelteile auf. Die Kunststoffspritzgusseinzelteile werden bei dem Verfahren vorzugsweise durch ein Einspritzen einer Kunststoffformmasse gebildet.

Weiterhin wird ein mehrteiliges Kunststoffbauteil angegeben, das zumindest zwei Kunststoffspritzgusseinzelteile aufweist, die mittels eines Kunststoffverbindungsbauteils, welches aus einem nichtelastomeren Thermoplasten gebildet ist, verbunden sind. Das mehrteilige Kunststoffbauteil kann eines oder mehrere Merkmale, wie sie im Zusammenhang mit dem Verfahren zum Herstellen des mehrteiligen Kunststoffbauteils genannt worden sind, aufweisen. Das mehrteilige Kunststoffbauteil kann insbesondere mit dem vorher beschriebenen Verfahren hergestellt werden.

Gemäß einer weiteren Ausführungsform ist das mehrteilige Kunststoffbauteil ein zweischaliges Fahrzeugaußenhautteil. Beispielsweise kann das erste Kunststoffspritzgusseinzelteil ein Oberschalenbauteil des Fahrzeugaußenhautteils sein und das zweite Kunststoffspritzgusseinzelteil kann ein Unterschalenbauteil des Fahrzeugaußenhautteils sein. Vorzugsweise ist das Oberschalenbauteil vollständig lackiert, und das Unterschalenbauteil ist vorzugsweise zumindest teilweise lackiert. Weiterhin ist das Kunststoffverbindungsbauteil, das die beiden Kunststoffspritzgusseinzelteile verbindet, vorzugsweise zumindest teilweise lackiert.

Gemäß einer weiteren Ausführungsform ist das zweischalige Fahrzeugaußenhautteil eine Fahrzeugheckklappe oder einen Fahrzeugheckspoiler oder eine Fahrzeugheckblende. Insbesondere kann es sich bei dem Fahrzeugaußenhautteil um einen aktiven Heckspoiler, d.h. um einen ausfahrbaren Heckspoiler, handeln.

Weitere Vorteile und vorteilhafte Ausführungsformen des hier beschriebenen Verfahrens sowie des hier beschriebenen mehrteiligen Kunststoffbauteils ergeben sich aus den im Folgenden in Verbindung mit den Figuren 1 bis 3 beschriebenen Ausführungsformen. Es zeigen:
- Fig. 1: eine schematische Darstellung eines Verfahrens zum Herstellen eines mehrteiligen Kunststoffbauteils gemäß einem Ausführungsbeispiel,
- Fig. 2: eine schematische Ansichten einer Vorrichtung zum Spritzgießen eines mehrteiligen Kunststoffbauteils gemäß einem weiteren Ausführungsbeispiel, und
- Fig. 3: eine schematische Darstellung des Verfahrens zum Herstellen eines mehrteiligen Kunststoffbauteils gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

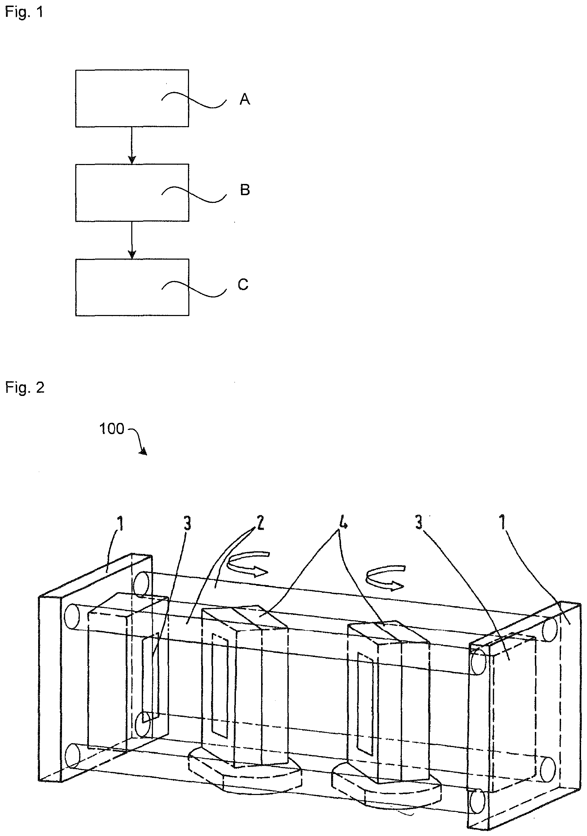

Figur 1 zeigt eine schematische Darstellung eines Verfahrens zum Herstellen eines mehrteiligen Kunststoffbauteils gemäß einem Ausführungsbeispiel. In einem Verfahrensschritt A werden ein erstes Kunststoffspritzgusseinzelteil 10 und ein zweites Kunststoffspritzgusseinzelteil 20 ausgebildet. Dabei kann beispielsweise eine Spritzgussvorrichtung 100, wie sie z.B. im Zusammenhang mit der Figur zwei beschrieben ist, zum Einsatz kommen. Die Kunststoffspritzgusseinzelteile 10,20 sind vorzugsweise aus einem Thermoplasten gebildet, beispielsweise aus Polypropylen, Polyamid oder Polybutylenterephthalat. In einem Verfahrensschritt B, der sich beispielsweise direkt an den Verfahrensschritt A anschließen kann, werden die Kunststoffspritzgusseinzelteile durch Einspritzen einer Kunststoffformmasse, die ein nichtelastomerer Thermoplast ist, miteinander verbunden. Der nichtelastomere Thermoplast kann beispielsweise ein Polyolefin sein, wie z.B. Polypropylen, Polyethylen oder Polyisobutylen. Vorzugsweise weist der nichtelastomere Thermoplast einen Schmelzflussindex von größer oder gleich 100 g / 10 min auf. Nach einem Aushärtevorgang bildet die aus dem nichtelastomeren Thermoplasten gebildete Kunststoffformmasse ein Kunststoffverbindungsbauteil 30. Das Kunststoffverbindungsbauteil 30 kann beispielsweise eine Shore-D-Härte von mindestens 60 aufweisen. In einem weiteren Verfahrensschritt C, der dem Verfahrensschritt B nachfolgt, werden sowohl die Kunststoffspritzgusseinzelteile 10, 20 als auch das Kunststoffverbindungsbauteil 30 zumindest teilweise lackiert.

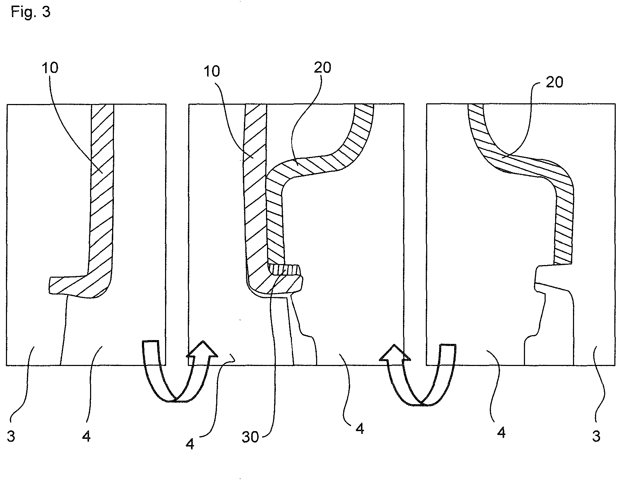

Die in den Figuren 2 und 3 dargestellte Vorrichtung zum Spritzgießen eines mehrteiligen Kunststoffbauteils weist einen Rahmen aus zwei Maschinenplatten 1 sowie vier, die Maschinenplatten verbindende Holme 2 auf. Jeweils ein äußeres Werkzeugelement 3 ist an einer der Maschinenplatten 1 anliegend positioniert.

Innerhalb des durch die Holme 2 definierten Raums und zwischen den zwei äußeren Werkzeugelementen 3 befinden sich zwei innere, quaderförmige Werkzeugelemente 4, die mittels nicht dargestellter Antriebe sowohl rotatorisch als auch translatorisch entlang der durch die Streben definierten Richtung verfahrbar sind. Jeweils zwei gegenüberliegende Seiten der quaderförmigen inneren Werkzeugelemente 4 sind so ausgebildet, dass sie bei einem planen Anliegen an das jeweils angrenzende äußere Werkzeugelement 3 mit diesem eine Kavität ausbilden, in die mittels nicht dargestellter Spritzaggregate eine Kunststoffformmasse zur Herstellung der Kunststoffspritzgusseinzelteile 10, 20 eingespritzt werden kann. Nach einem ausreichenden Aushärten der Kunststoffformmasse werden die inneren Werkzeugelemente 4 translatorisch verfahren, wodurch die jeweils aus einem inneren und einem äußeren Werkzeugelement gebildete Form (Kavität) geöffnet wird. Die Kunststoffspritzgusseinzelteile 10, 20 werden mittels nicht dargestellter Fixiervorrichtungen an dem jeweiligen inneren Werkzeugelement 4 fixiert.

Nach einer Rotation der beiden inneren Werkzeugelemente 4 um jeweils 180° werden diese soweit zusammengefahren, dass die zwei Kunststoffspritzgusseinzelteile 10, 20 durch das Einspritzen eines nichtelastomeren Thermoplasten in einen von den zwei Kunststoffspritzgusseinzelteilen 10, 20 gebildeten Fügenahthohlraum mittels eines nicht dargestellten Fügeaggregats gefügt werden können. Der zum Fügen der Kunststoffspritzgusseinzelteile 10, 20 eingespritzte nichtelastomere Thermoplast bildet nach einem Aushärtevorgang ein Kunststoffverbindungsbauteil 30. Die Verwendung eines nichtelastomeren Thermoplasten zum Fügen der Kunststoffspritzgusseinzelteile 10, 20 verbessert vorteilhafterweise die Lackierbarkeit der erhaltenen Kunststoffbauteile sowie die Steifigkeit derselben.

Gleichzeitig zum Einspritzen des nichtelastomeren Thermoplasten werden die äußeren Werkzeugelemente 3 an die freien Seiten der inneren Werkzeugelemente 4 herangefahren, so dass ein Spritzgießen weiterer Kunststoffspritzgusseinzelteile 10, 20 während des Fügeprozesses der zuvor hergestellten Kunststoffspritzgusseinzelteile 10, 20 erfolgen kann.

Nach dem Fügen der ersten zwei Kunststoffspritzgusseinzelteile 10, 20 und dem gleichzeitigen Spritzgießen der zweiten zwei Kunststoffspritzgusseinzelteile 10, 20 werden die äußeren Werkzeugelemente 3 nach außen verfahren, wodurch die Kunststoffspritzgusseinzelteile 10, 20 entformt werden und an den inneren Werkzeugelementen 4 fixiert bleiben. Gleichzeitig werden auch die zwei inneren Werkzeugelemente auseinander gefahren, so dass das gefügte Kunststoffbauteil von einem der inneren Werkzeugelemente 4 freigegeben wird, während es an dem anderen inneren Werkzeugelemente 4 fixiert bleibt. Nach einer Rotation der beiden inneren Werkzeugelemente 4 um 90° wird das fertige Kunststoffbauteil entnommen. Es folgt eine erneute Rotation der inneren Werkzeugelemente 4 um 90° und ein erneutes Zusammenfahren der vier Werkzeugelemente 3, 4 zu einem geschlossenen Block, so dass die zweiten zwei Kunststoffspritzgusseinzelteile 10, 20 mittels des nichtelastomeren Thermoplasten gefügt und ein drittes Paar von Kunststoffspritzgusseinzelteilen 10, 20 spritzgegossen werden kann. Der beschriebene Zyklus kann sich zur Herstellung einer Vielzahl von mehrteiligen Kunststoffbauteilen in einer hohen Taktzahl wiederholen.

Die erhaltenen Kunststoffbauteile können beispielsweise zweischalige Fahrzeugaußenhautteile sein insbesondere kann es sich bei den Kunststoffbauteilen um Fahrzeugheckklappen, Fahrzeugheckspoiler oder Fahrzeugheckblenden handeln.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

## Patentansprüche

1. Verfahren zum Herstellen eines zweischaligen Fahrzeugaußenhautteils, aufweisend die folgenden Schritte:
- Ausbilden eines ersten Kunststoffspritzgusseinzelteils (10) und eines zweiten Kunststoffspritzgusseinzelteils (20),
- Fügen der Kunststoffspritzgusseinzelteile (10, 20) durch Einspritzen einer Kunststoffformmasse, wobei die Kunststoffformmasse ein nichtelastomerer Thermoplast ist und nach einem Aushärtevorgang ein Kunststoffverbindungsbauteil (30) bildet,
- zumindest teilweises Lackieren der Kunststoffspritzgusseinzelteile (10, 20) und des Kunststoffverbindungsbauteils (30),
- **dadurch gekennzeichnet, dass** der nichtelastomere Thermoplast aus einem Polyolefin besteht,
- dass der nichtelastomere Thermoplast einen Schmelzflussindex MFR ≥ 70 g/10 min aufweist, und
- dass das Kunststoffverbindungsbauteil (30) eine Shore-D-Härte von größer oder gleich 60 aufweist.

2. Verfahren nach Anspruch 1, wobei der nichtelastomere Thermoplast Polypropylen, Polyethylen und/oder Polyisobutylen aufweist oder aus Polypropylen, Polyethylen oder Polyisobutylen besteht.

3. Verfahren nach einem der vorhergehenden Ansprüche, wobei das mehrteilige Kunststoffbauteil mittels einer Vorrichtung (100) zum Spritzgießen gebildet wird, welche mindestens zwei äußere Werkzeugelemente (3) und mindestens zwei zwischen den äußeren Werkzeugelementen (3) angeordneten innere Werkzeugelemente (4) aufweist, wobei die äußeren Werkzeugelemente (3) mit dem jeweils angrenzenden inneren Werkzeugelement (4) jeweils eine Kavität bilden, in die mittels eines oder mehrerer Spritzaggregate zur Erzeugung der Kunststoffspritzgusseinzelteile (10, 20) eine Kunststoffformmasse eingebracht wird, und wobei die zwei inneren Werkzeugelemente (4) dreh- und/oder verfahrbar ausgebildet sind.

4. Verfahren nach Anspruch 3, wobei die Vorrichtung (100) mindestens ein Fügeaggregat zum Fügen der Kunststoffspritzgusseinzelteile (10, 20) durch Einspritzen einer Kunststoffformmasse aufweist.

5. Mehrteiliges Kunststoffbauteil, welches ein zweischaliges Fahrzeugaußenhautteil ist, umfassend zumindest zwei Kunststoffspritzgusseinzelteile (10, 20), die mittels eines Kunststoffverbindungsbauteils (30), das aus einem nichtelastomeren Thermoplast, der aus einem Polyolefin besteht, gebildet ist, verbunden sind, wobei das mehrteilige Kunststoffbauteil nach einem Verfahren nach einem der Ansprüche 1 bis 4 hergestellt ist.

6. Mehrteiliges Kunststoffbauteil nach Anspruch 5, wobei das erste Kunststoffspritzgusseinzelteil (10) ein Oberschalenbauteil des Fahrzeugaußenhautteils und das zweite Kunststoffspritzgusseinzelteil (20) ein Unterschalenbauteil des Fahrzeugaußenhautteils ist, wobei das Oberschalenbauteil vollständig lackiert ist und das Unterschalenbauteil zumindest teilweise lackiert ist.

7. Mehrteiliges Kunststoffbauteil nach einem der Ansprüche 5 oder 6, wobei das zweischalige Fahrzeugaußenhautteil eine Fahrzeugheckklappe, ein Fahrzeugheckspoiler oder eine Fahrzeugheckblende ist.

## Claims

1. Process for producing a double-shelled vehicle outer skin part comprising the steps of:
- forming a first individual injection molded plastics part (10) and a second individual injection molded plastics part (20),
- joining the individual injection molded plastics parts (10, 20) by injection of a plastics molding material, wherein the plastics molding material is a nonelastomeric thermoplastic and after a hardening operation forms a plastics joining component (30),
- at least partial painting of the individual injection molded plastics parts (10, 20) and of the plastics joining component (30),
- **characterized in that** the nonelastomeric thermoplastic consists of a polyolefin,
- **in that** the nonelastomeric thermoplastic has a melt flow index MFR ≥ 70 g/10 min and
- **in that** the plastics joining component (30) has a Shore D hardness of not less than 60.

2. Process according to Claim 1, wherein the nonelastomeric thermoplastic comprises polypropylene, polyethylene and/or polyisobutylene or consists of polypropylene, polyethylene or polyisobutylene.

3. Process according to either of the preceding claims, wherein the multi-part plastics component is formed using an apparatus (100) for injection molding which comprises at least two outer mold elements (3) and at least two inner mold elements (4) arranged between the outer mold elements (3), wherein the outer mold elements (3) each form a cavity with the respective adjacent inner mold element (4) into which using one or more injection assemblies for manufacturing the individual injection molded plastics parts (10, 20) a plastics molding material is introduced and wherein the two inner mold elements (4) are rotatably and/or movably formed.

4. Process according to Claim 3, wherein the apparatus (100) comprises at least one joining assembly for joining the individual injection molded plastics parts (10, 20) by injection of a plastics molding material.

5. Multi-part plastics component which is a double-shelled vehicle outer skin part comprising at least two individual injection molded plastics parts (10, 20) joined by means of a plastics joining component (30) formed from a non-elastomeric thermoplastic which consists of a polyolefin, wherein the multi-part plastics component has been produced by a process according to any of Claims 1 to 4.

6. Multi-part plastics component according to Claim 5, wherein the first individual injection molded plastics part (10) is an outer shell component of the vehicle outer skin part and the second individual injection molded plastics part (20) is an inner shell component of the vehicle outer skin part, wherein the outer shell component is completely painted and the inner shell component is at least partially painted.

7. Multi-part plastics component according to either of Claims 5 and 6, wherein the double-shelled vehicle outer skin part is a vehicle trunk lid, a vehicle rear spoiler or a vehicle rear trim panel.

## Revendications

1. Procédé de fabrication d'une pièce de carrosserie de véhicule à deux coques, le procédé comprenant les étapes suivantes :
- former une première pièce moulée par injection de matière synthétique (10) et d'une deuxième pièce moulée par injection de matière synthétique (20),
- assembler des pièces moulées par injection de matière synthétique (10, 20) par injection d'un composé de moulage synthétique, le composé de moulage synthétique étant une matière thermoplastique non élastomère et formant, après un processus de durcissement, un composant de liaison de matière synthétique (30),
- peindre au moins partiellement les pièces moulées par injection de matière synthétique (10, 20) et le composant de liaison de matière synthétique (30),
- **caractérisé en ce que** la matière thermoplastique non élastomère est une polyoléfine,
- la matière thermoplastique synthétique non élastomère a un indice de fluidité MFR ≥ 70 g/10 min, et
- le composant de liaison de matière synthétique (30) a une dureté Shore D supérieure ou égale à 60.

2. Procédé selon la revendication 1, la matière thermoplastique non élastomère comprenant du polypropylène, du polyéthylène et/ou du polyisobutylène ou étant en polypropylène, polyéthylène ou polyisobutylène.

3. Procédé selon l'une des revendications précédentes, le composant en matière synthétique à plusieurs parties étant formé au moyen d'un dispositif (100) de moulage par injection qui comporte au moins deux éléments d'outil extérieurs (3) et au moins deux éléments d'outil intérieurs (4) disposés entre les éléments d'outil extérieurs (3), les éléments d'outil extérieurs (3) formant chacun avec l'élément d'outil intérieur (4) adjacent une cavité dans laquelle un composé de moulage en matière synthétique est introduit au moyen d'une ou plusieurs unités d'injection pour produire des pièces individuelles (10, 20) moulées par injection de matière synthétique, et les deux éléments d'outil intérieurs (4) étant conçus pour être mobiles en rotation et/ou en translation.

4. Procédé selon la revendication 3, le dispositif (100) comportant au moins une unité d'assemblage destinée à assembler les pièces individuelles (10, 20), moulées par injection de matière synthétique, par injection d'un composé de moulage de matière synthétique.

5. Composant en matière synthétique à plusieurs parties, lequel est une pièce de carrosserie de véhicule à deux coques et comprend au moins deux pièces individuelles (10, 20), moulées par injection de matière synthétique, qui sont reliées au moyen d'un composant de liaison de matière synthétique (30) qui est formé à partir d'une matière thermoplastique non élastomère qui est une polyoléfine, le composant en matière synthétique à plusieurs parties étant produit par un procédé selon l'une des revendications 1 à 4.

6. Composant en matière synthétique à plusieurs parties selon la revendication 5, la première pièce individuelle (10) moulée par injection de matière synthétique étant un composant de coque supérieur de la pièce de carrosserie de véhicule et la deuxième pièce individuelle (20) moulée par injection de matière synthétique étant un composant de coque inférieur de la pièce de carrosserie de véhicule, le composant de coque supérieur étant entièrement peint et le composant de coque inférieur étant au moins partiellement peint.

7. Composant en matière synthétique à plusieurs parties selon l'une des revendications 5 et 6, la pièce de carrosserie de véhicule à deux coques étant un hayon de véhicule, un becquet arrière de véhicule ou un panneau arrière de véhicule.
